# EUROPÄISCHE PATENTANMELDUNG

(11) **EP 1 152 311 A1**
(43) Veröffentlichungstag der Anmeldung: **07.11.2001**
(21) Anmeldenummer: 01107327.7
(22) Anmeldetag: 24.03.2001
(51) Int. Cl.: G05B 23/02, G01M 15/00, G06F 3/00

(54) **Mobile, rechnergestütze Wartungseinheit**

(30) Priorität: 04.05.2000 DE 10021619
(71) Anmelder: Focke & Co. (GmbH & Co.), 27283 Verden (DE)
(72) Erfinder: Focke, Heinz, 27283 Verden (DE); Dittrich, Andreas, 27308 Kirchlinteln (DE)
(74) Vertreter: Bolte, Erich, Dipl.-Ing.

(57) **Zusammenfassung**

Die Erfindung betrifft eine mobile, rechnergestützte Wartungseinheit (12) zur Wartung von Maschinen (11) mit einer ersten Schnittstelle zum Herstellen einer ersten Verbindung (13) zum Übertragen von Daten- und/oder Messsignalen zwischen der Wartungseinheit (12). Der Erfindung liegt die Aufgabe zugrunde. derartige Wartungseinheiten zu verbessern. Sie löst diese Aufgabe durch eine zweite Schnittstelle zum Herstellen einer zweiten Verbindung (15) zum Übertragen von Daten-, Bild- und/oder Tonsignalen zwischen der Wartungseinheit (12) und einer mobilen, insbesondere am Kopf tragbaren Kommunikationseinheit (16). Die Erfindung ermöglicht somit auch die von der Wartungseinheit unterstützte Wartung an schwer zugänglichen Bereichen.

## Beschreibung

Die Erfindung betrifft eine mobile, rechnergestützte Wartungseinheit zur Wartung von Maschinen mit einer ersten Schnittstelle zum Herstellen einer ersten, insbesondere drahtgebundenen, Verbindung zum Übertragen von Daten- und/oder Messsignalen zwischen der Wartungseinheit und einer Maschine.

Bekannt sind derartige mobile, rechnergestützte Wartungseinheiten bspw. aus der Kraftfahrzeugtechnik, wo mobile Messeinheiten zur Motordiagnose an Kraftfahrzeugen in Werkstätten eingesetzt werden. Hierzu befinden sich auf einem rollbaren Wagen rechnergestützte Messgeräte, die über Messleitungen mit dem Motor eines Kraftfahrzeugs verbunden werden können. Derartige Wartungseinheiten sind jedoch nur für den Einsatz an kleineren Maschinen, wie Kraftfahrzeugen, geeignet, wo die Wartungsperson sich während der Wartungsmaßnahme sowohl im Bereich der Maschine als auch der Wartungseinheit befindet. Bei größeren Maschinen sind diese bekannten Wartungseinheiten jedoch nachteilig, da sich die Wartungseinheit immer wieder außer Reichweite der Wartungsperson befindet.

Der Erfindung liegt die Aufgabe zugrunde, derartige mobile, rechnergestützte Wartungseinheiten zu verbessern.

Gelöst wird diese Aufgabe mit einer Wartungseinheit der eingangs genannten Art, die durch eine zweite Schnittstelle zum Herstellen einer, insbesondere drahtlosen, zweiten Verbindung zum Übertragen von Daten-, Bild- und/oder Tonsignalen zwischen Wartungseinheit und einer mobilen, insbesondere am Kopf tragbaren Kommunikationseinheit gekennzeichnet ist.

Die mobile Kommunikationseinheit ermöglicht einem Maschinenbediener auch bei größeren Maschinen an schwer zugänglichen Bereichen von der Wartungseinheit unterstützte Wartungsmaßnahmen durchzuführen, da der Bediener aufgrund der mobilen Kommunikationseinheit nicht mehr auf eine enge räumliche Nähe zur Wartungseinheit angewiesen ist. Vielmehr kann der Bediener frei und ungehindert im wesentlichen an allen Maschinenbereichen agieren. Dies ist insbesondere vorteilhaft bei großen Maschinen, wie bei Herstellungs- bzw. Verpackungsmaschinen für Zigaretten oder andere Produkte.

Bevorzugt ist die mobile Kommunikationseinheit mit einer am Kopf tragbaren Haltevorrichtung für einen Kopfhörer, eine Kamera und ein Mikrofon ausgebildet. Besonders bevorzugt weist diese Haltevorrichtung auch einen, insbesondere schwenkbaren, Monitor auf. Vorteilhafterweise kann der Monitor direkt in das Gesichtsfeld des Bedieners geschwenkt werden, so dass er ohne den Blick von der Maschine abwenden zu müssen, auf dem Monitor dargestellte Instruktionen ablesen kann.

Weiter bevorzugt weist die Wartungseinheit eine dritte Schnittstelle zum Herstellen einer dritten Verbindung auf, mittels derer Daten-, Bild- und/oder Tonsignale mit einer externen bzw. dezentralen Kontrolleinheit ausgetauscht werden können. Die Wartungseinheit ist somit bspw. an ein Telefonnetz oder ein Weitverkehrsnetz (WAN) anschließbar. Hierdurch kann auf vorteilhafte Weise eine Verbindung zum Maschinenhersteller hergestellt werden, der der Bedienperson an der Maschine weitere Instruktionen erteilt. Diese Instruktionen können entweder individuell von einem geschulten Mitarbeiter des Herstellers oder aber auch automatisch von einem beim Hersteller eingerichteten Wartungs-/Sprachcomputer gegeben werden.

Weiter bevorzugt weist die Wartungseinheit eine vierte Schnittstelle zum Herstellen einer vierten Verbindung, insbesondere über eine Nahbereichsnetz (LAN) auf, zum Übertragen von Daten-, Bild- und/oder Tonsignalen zu einer internen, insbesondere hausinternen Kontrolleinheit auf. Durch diese vierte Verbindung kann bspw. ein Entscheidungsträger des Maschinenherstellers in einen laufenden Wartungsprozess einbezogen werden, ohne dass der Entscheidungsträger sich im unmittelbaren Bereich der Maschine befinden müsste. Vielmehr kann er bspw. von seinem Arbeitsplatz aus über das hausinterne Daten- bzw. Kommunikationsnetz mit der Wartungseinheit und damit mit dem Bediener vor Ort kommunizieren und dabei gleichzeitig Maschinendaten einsehen.

Insgesamt erlaubt die erfindungsgemäße Wartungseinheit mehrere Instanzen miteinander derart zu verbinden, dass die Wartung komplizierter Maschinen erheblich vereinfacht wird. Hierdurch ist es möglich, auch weniger geschultes Personal vor Ort einsetzen zu können. Ggf. fehlende Wartungsinformationen kann der Bediener vor Ort dank der erfindungsgemäßen Wartungseinheit entweder von der Wartungseinheit selbst oder von den mit der Wartungseinheit verbundenen Instanzen erhalten.

Weitere Einzelheiten der Erfindung ergeben sich aus den Unteransprüchen und den anhand der Zeichnungen erläuterten Ausführungsbeispiele. Es zeigt:
- Fig. 1: ein Wartungssystem mit einer Wartungseinheit gemäß einem Ausführungsbeispiel der Erfindung;
- Fig. 2: eine an eine Maschine angeschlossene Wartungseinheit;
- Fig. 3: eine Wartungseinheit in vergrößerter Ansicht und
- Fig. 4: eine am Kopf getragene Kommunikationseinheit.

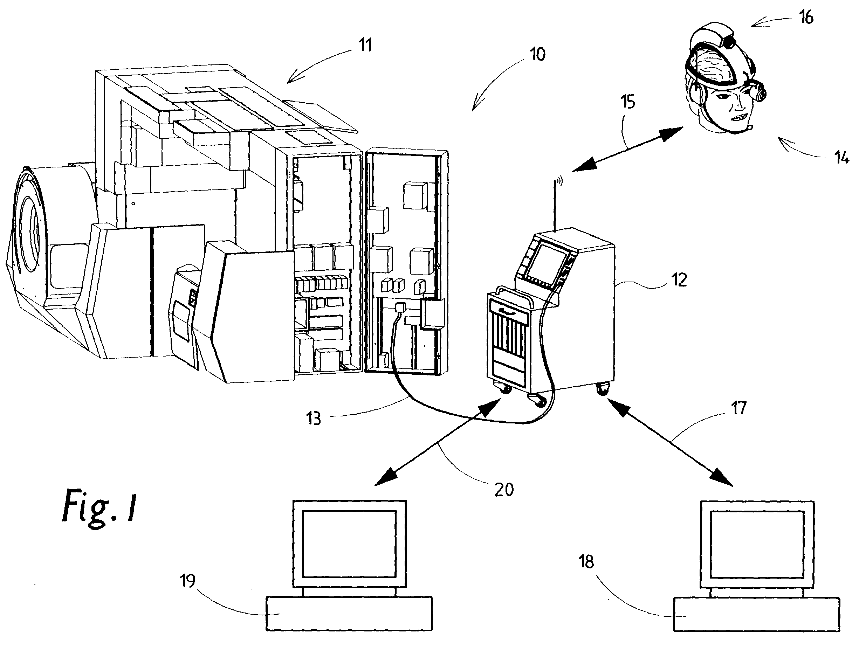

Fig. 1 zeigt ein Wartungssystem 10 für eine Zigarettenverpakkungsmaschine 11 des Typs Weichpacker. Das grundlegende Konzept des Wartungssystems 10 eignet sich jedoch auch für andere Maschinen, insbesondere auch bei der Herstellung anderer Produkte des täglichen Bedarfs. Wichtigste Komponente des Wartungssystems 10 ist die mobile, rechnergestützte Wartungseinheit 12. Die Wartungseinheit 12 weist mehrere Schnittstellen zum Herstellen mehrerer Verbindungen zum Übertragen von Daten-, Mess-, Bild- und/oder Tonsignalen auf. Über diese Verbindungen werden mehrere Instanzen miteinander verbunden. Eine erste Instanz ist die Maschine 11, die über eine erste, drahtgebundene Verbindung 13 mit der Wartungseinheit 12 verbunden ist. Über diese erste Verbindung 13 werden Daten- und/oder Messsignale zwischen der Wartungseinheit 12 und der Maschine 11 ausgetauscht. Statt einer drahtgebundenen Verbindung 13 kann jedoch auch eine drahtlose Verbindung zwischen Wartungseinheit 12 und Maschine 11 hergestellt werden. Jedoch ist eine drahtgebundene Verbindung wegen besserer Abschirmmöglichkeiten vor Störsignalen vorteilhaft, insbesondere wenn analoge Messsignale übertragen werden.

Ferner ist mit der Wartungseinheit 12 eine sich vor Ort, d.h. bei der Maschine 11 befindende Wartungsperson 14 verbindbar. Hierzu weist die Verpackungseinheit 12 eine zweite Schnittstelle zum Herstellen einer drahtlosen, zweiten Verbindung 15 zu einer mobilen und am Kopf der Person 14 tragbaren Kommunikationseinheit 16 auf. Über diese zweite Verbindung 15 werden Daten-, Bild- und/oder Tonsignale bidirektional übertragen.

Über eine dritte Schnittstelle der Wartungseinheit 12 ist eine dritte Verbindung zu einer externen bzw. dezentralen Kontrolleinheit 18 beim Hersteller der Maschine aufbaubar. Diese dritte Verbindung 17 wird insbesondere über ein Telefon- und/oder Weitverkehrsnetz (WAN), insbesondere über das Internet hergestellt. Die dritte Schnittstelle ist daher derart ausgebildet, dass Daten mit den für diese Netze notwendigen Protokollen, bspw. TCP/IP oder ISDN-Protokoll, übertragen werden können. Über diese Verbindung kann ein spezieller Fachmann für die Maschine 11 des Maschinenherstellers über weite Entfernungen mit der sich vor Ort befindenden Person 14 kommunizieren, um Wartungsmaßnahmen gezielt steuern zu können. Ferner können über diese dritte Verbindung auch Schulungslehrgänge u.ä. für das sich vor Ort der Maschine 11 befindende Wartungspersonal 14 durchgeführt werden. Die dezentrale Kontrolleinheit 18 weist hierzu einen Computerterminal mit Bildschirm und Eingabeeinrichtung auf. Insbesondere weist sie auch eine Videokonferenz mit Kamera, Bildschirm, Lautsprecher und Mikrofon auf.

Die dritte Schnittstelle der Wartungseinheit 12 kann zusätzlich mit einer sog. Firewall versehen sein. Hierbei handelt es sich um eine in einem Rechner der Wartungseinheit 12 arbeitende Schutzvorrichtung, die ein unerlaubtes Eindringen in die Daten der Wartungseinheit 12 über die dritte Verbindung 17 zum Schutz vor Datendiebstahl bspw. vor datengefährdenden Programmen (Viren) gewährleistet.

Neben den genannten drei Instanzen, nämlich Maschine 11, Wartungsperson 14 und beim Hersteller aufgestellte Kontrolleinheit 18 ist bevorzugt auch eine vierte Instanz in das Wartungssystem 10 eingebunden, nämlich eine interne Kontrolleinheit 19. Diese interne Kontrolleinheit 19 wird über eine vierte Verbindung 20 über eine vierte Schnittstelle der Wartungseinheit 12 mit der Wartungseinheit 12 verbunden. Die vierte Verbindung benutzt ein Nahbereichsnetz, d.h. ein sog. LAN (Local Area Network), d.h. ein beim Maschinenaufsteller betriebenes Datennetz. Über diese vierte Verbindung werden ebenfalls Daten-, Bild- und/oder Tonsignale zwischen der Wartungseinheit 12 und der internen Kontrolleinheit 19 ausgetauscht. Diese können an einem Computerterminal grafisch und/oder akustisch dargestellt werden. Insbesondere ist jedoch über diese vierte Verbindung auch ein weiteres Videokonferenzsystem betreibbar. Die interne Kontrolleinheit ist bei einem Entscheidungsträger, bspw. Abteilungsleiter, beim Maschinenhersteller untergebracht. Dies ermöglicht es, wichtige Entscheidungen bezüglich vorzunehmender Servicemaßnahmen an der Maschine 11 unter unmittelbarer Einbeziehung von Kompetenz herbeizuführen.

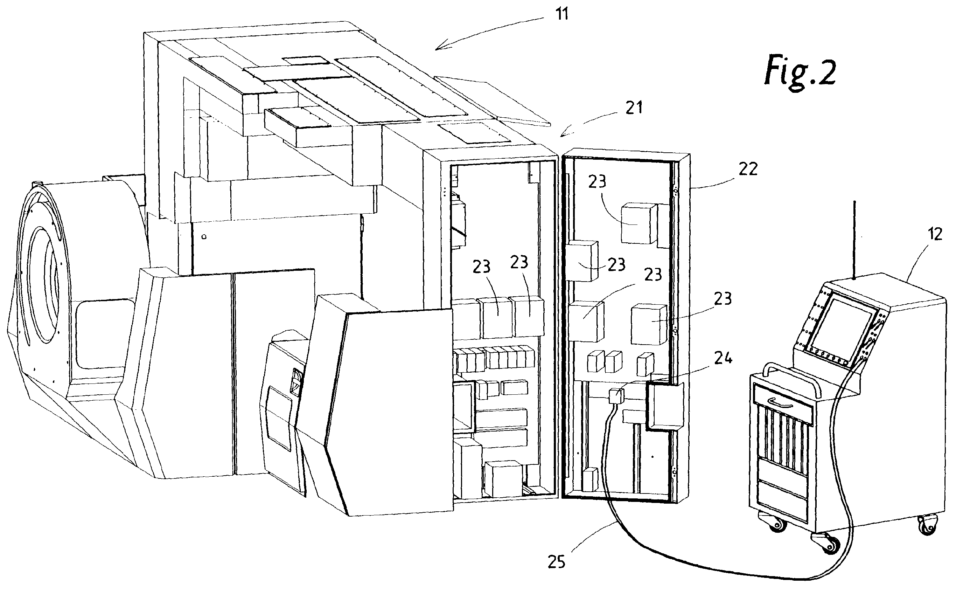

Fig. 2 zeigt einen vergrößerten Ausschnitt aus Fig. 1 und zwar die mobile Wartungseinheit 12 und die Maschine 11. Die Maschine 11 weist einen Schaltschrank 21 auf, der mit geöffneter Tür 22 dargestellt ist. Innerhalb des Schaltschranks 21 befinden sich Steuerungsmodule 23 für die verschiedenen Organe der Maschine. Auch die elektrische Energieversorgung der Maschine und deren Aggregate ist im Schaltschrank 21 untergebracht. Der Schaltschrank weist auch eine Schnittstelle 24 auf, über welche die verschiedenen Steuerungsmodule 23 abgetastet aber auch andere elektrische Potentiale der Maschine 11 abgegriffen werden können. Die Schnittstelle 24 ist über eine Mess- und Datenleitung 25 zum Übertragen von Mess- und Datensignalen an die Wartungseinheit 12 lösbar verbunden. Diese Mess- und Datenleitung 25 ist wiederum mit der ersten Schnittstelle der Wartungseinheit 12 verbunden. Über diese erste Verbindung zum Übertragen von Daten- und Messsignalen zwischen der Wartungseinheit 12 und der Maschine 11 können verschiedene Signale ausgetauscht werden. Einerseits werden von der Maschine zur Wartungseinheit 12 Messsignale übertragen, um etwaige Störungen erfassen zu können. Es können aber auch Dateninhalte, die in entsprechenden Datenspeichern der Maschine 11 gespeichert sind, an die Wartungseinheit 12 übertragen werden, bspw. Stückzahlen hergestellter Produkte, Maschinenlaufzeiten, Anzahl fehlerhafter Produkte, Anzahl insgesamt hergestellter Produkte sowie weitere den Maschinenbetrieb kennzeichnende Größen. Aus diesen Daten lassen sich eventuelle Störungen eingrenzen. Darüber hinaus können diese Daten aber auch für vorbeugende Wartungsmaßnahmen verwendet werden.

In entgegengesetzter Richtung, d.h. von der Wartungseinheit 12 zu der Maschine 11, können ebenfalls Daten übertragen werden. Dies kommt insbesondere in Betracht, um Maschinenparameter zu setzen, bspw. einzelnen Formaten zugeordnete Parameter, Arbeitsgeschwindigkeiten u.ä. Die Mess- und Datenleitung 25 kann daher sowohl als unidirektionale als auch als bidirektionale Datenleitung dienen.

Die erste Schnittstelle der Wartungseinheit für die Verbindung zwischen Maschine 11 und Wartungseinheit 12 weist auch eine Einheit auf, um die zu übertragenden Mess- und Datensignale an verschiedene Maschinenstandards anzupassen. Aufgrund der Langlebigkeit größerer Maschinen 11 weisen derartige Maschinen baujahrsbedingte Unterschiede, insbesondere bezüglich der Steuerungstechnik auf. Die Wartungseinheit 12 kann diese unterschiedlichen Maschinenstandards automatisch erkennen und die zu übertragenden Mess- und Datensignale entsprechend umsetzen und anpassen.

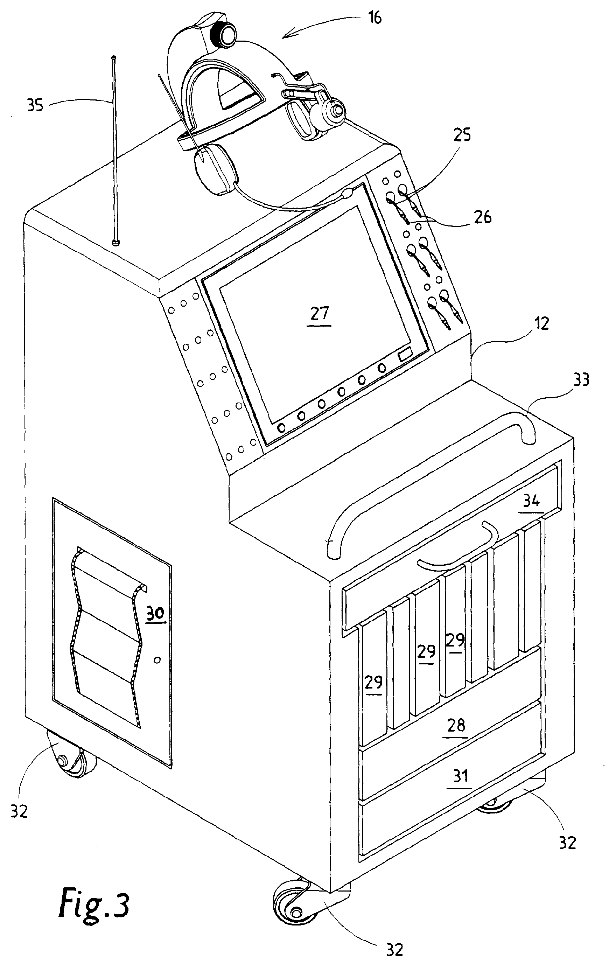

Fig. 3 zeigt die Wartungseinheit 12 in weiter vergrößerter Darstellung. Die Mess- und Datenleitungen 25 sind als auf einer nicht dargestellten Trommel aufwickelbare Kabel ausgebildet. An ihren Enden weisen sie Stecker 26 zum Verbinden mit der maschinenseitigen Schnittstelle 24 auf. Die Wartungseinheit 12 weist ferner einen sog. Touch-Screen-Bildschirm 27 auf. Durch Berührung der Oberfläche des Touch-Screen-Bildschirms 27 kann die Wartungsperson Eingaben an die Wartungseinheit 12 richten. Hierzu sind menügeführte Oberflächen vorgesehen. Zusätzlich oder alternativ können weitere Eingabeeinheiten an der Wartungseinheit 12 vorgesehen sein, insbesondere eine Tastatur, eine Maus, ein Trackball o.ä.

Der Bildschirm 27 ist mit einer nicht dargestellten Rechnereinheit 28 innerhalb der Wartungseinheit verbunden. Diese Rechnereinheit 28 ist vorzugsweise als Einschub mit genormter Breite, insbesondere 19'-Einschub, ausgebildet. Die Rechnereinheit ist ferner mit mehreren Messgeräten 29 innerhalb der Wartungseinheit 12 verbunden. Bei diesen Messgeräten handelt es sich bspw. um Multimeter, Oszilloskop, FFT-Analyzer o.ä. Als Ausgabeeinheit dient diesen Messgeräten 29 der Bildschirm 27. Ferner ist die Rechnereinheit 28 mit einem Drucker 30 verbunden, der ebenfalls in der Wartungseinheit 12 integriert ist. Die elektrische Energieversorgung der Wartungseinheit erfolgt vorrangig unabhängig. Hierzu ist ein Akkumulator 31 vorgesehen, der sich im unteren Bereich der Wartungseinheit 12 befindet. Vorteilhafterweise ist dieser Akkumulator im Zentrum der Grundfläche der als Wagen ausgebildeten Wartungseinheit ausgebildet, um zusätzliche Sicherheit gegen Umkippen zu gewährleisten.

Ebenfalls im unteren Bereich der Wartungseinheit 12 befinden sich mehrere Rollen 32, die vollzählig oder teilweise um eine senkrechte Achse schwenkbar ausgebildet sind. Bevorzugt sind jedoch nur zwei von vier Rollen 32 um die senkrechte Achse schwenkbar, um die Manövrierfähigkeit der wagenartigen Wartungseinheit 12 zu verbessern. Um die Manövrierfähigkeit weiter zu verbessern, ist außerdem ein Griff 33 vorgesehen, der oberhalb um die senkrechte Achse drehbaren Rollen 32 angeordnet ist.

Die Wartungseinheit weist ferner einen Behälter, nämlich eine Schublade 34 zur Aufnahme von häufig benötigten Werkzeugen auf.

Die Wartungseinheit weist darüber hinaus eine Sendeeinrichtung mit einer Antenne 35 auf mittels derer die zweite, drahtlose Verbindung 15 zur mobilen Kommunikationseinheit 16 herstellbar ist. Über die Antenne 35 werden jedoch nicht nur Signale gesendet, sondern auch empfangen, so dass die zweite Verbindung 15 ebenfalls einen bidirektionalen Austausch von Daten-, Bildund/oder Tonsignalen zwischen Wartungseinheit 12 und Kommunikationseinheit 16 ermöglicht. Statt einer derartigen drahtlosen Verbindung 15 kann jedoch auch eine drahtgebundene Verbindung vorgesehen sein. Die drahtlose Verbindung ist jedoch vorzuziehen, da wegen der teilweise großen, zu überbrückenden Entfernungen ein längeres Kabel ein Unfallrisiko darstellt. Die Wartungseinheit weist ferner elektronische Bauteile für ein Videokonferenzsystem auf. Darüber hinaus sind (nicht-dargestellte) Anschlüsse für die dritte und vierte Verbindung, also insbesondere Telefonleitungsanschlüsse sowie Datennetzanschlüsse, insbesondere für Koaxialkabel- oder Lichtwellenleiter und/oder 9-, 15- und/oder 25-polige Datenleitungen vorgesehen.

Die Rechnereinheit 28 weist einen Datenspeicher für eine Datenbank auf. In dieser Datenbank können Messdaten u.ä. gespeichert werden. Mittels des Druckers 30 können diese Daten sowie Messprotokolle auch direkt vor Ort ausgedruckt werden.

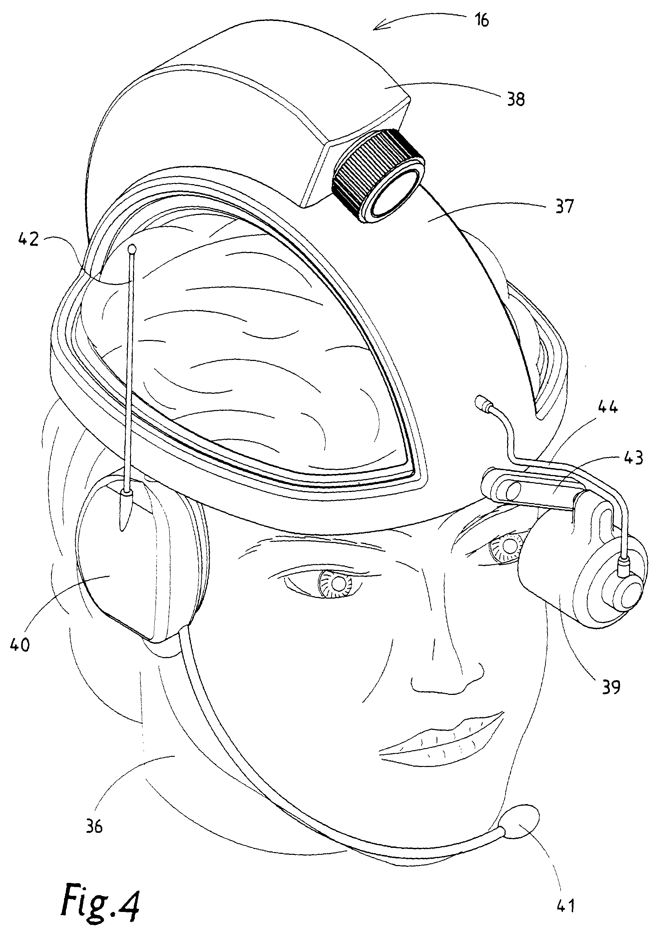

Fig. 4 zeigt eine am Kopf 36 einer Wartungsperson angebrachte mobile Kommunikationseinheit 16. Eine helmartig ausgebildete Haltevorrichtung 37 dient zur Aufnahme einer Kamera 38, eines Monitors 39 sowie zur Befestigung von Kopfhörern 40 und eines Mirkofons 41. Ferner ist am Kopfhörer 40 bzw. an der Haltevorrichtung 39 eine Sende- und Empfangseinheit mit einer Antenne 42 vorgesehen. Die Wartungsperson 14 trägt somit sämtliche für eine Kommunikation in Bild und Ton notwendigen Vorrichtungen am Kopf. Hierdurch hat sie jederzeit beide Hände für auszuführende Arbeiten frei, wobei sie jederzeit und an jedem Ort der Maschine 11 sämtliche notwendigen Informationen erhalten kann.

Die Kamera 38 ist derart an der Haltevorrichtung 37 angeordnet, dass sie in Blickrichtung der Wartungsperson gerichtet ist und somit im wesentlichen das gleiche Gesichtsfeld abdeckt wie die Wartungsperson. Der Monitor 39 ist über ein Verstellorgan 43 um eine oder mehrere Achsen schwenkbar angebracht. Hierdurch kann die Wartungsperson den Monitor 39 derart in ihrem Gesichtsfeld positionieren, dass eine geringstmögliche Beeinträchtigung des Gesichtsfeld bei gleichzeitig maximaler Erkennbarkeit des im Monitor 39 dargestellten Bildes gewährleistet ist. Die Wartungsperson kann dank des Verstellorgans 43 den Monitor entweder vor dem linken oder vor dem rechten Auge positionieren. Alternativ können auch anderen Monitorvorrichtungen vorgesehen sein, bspw. Monitore mit einem halbdurchlässigen Bildschirm, also einem Bildschirm, der sowohl einen Blick auf die Umgebung als auch auf das mittels des Bildschirm dargestellten Bildes zulässt. Ein Kabel 44 verbindet den Monitor mit der Sende- und Empfangseinheit der mobilen Kommunikationseinheit 16.

Dank der Erfindung kann die Wartung an größeren Maschinen deutlich vereinfacht und beschleunigt werden, insbesondere die Einbindung von Fachleuten beim Hersteller und Entscheidungsträgern beim Maschinenbetreiber ermöglichen eine besonders effiziente Maschinenwartung.

## Patentansprüche

1. Mobile, rechnergestützte Wartungseinheit (12) zur Wartung von Maschinen (11) mit einer ersten Schnittstelle zum Herstellen einer ersten, insbesondere drahtgebundenen, Verbindung (13) zum Übertragen von Daten- und/oder Messsignalen zwischen der Wartungseinheit (12) und einer Maschine (11), **gekennzeichnet durch** eine zweite Schnittstelle zum Herstellen einer, insbesondere drahtlosen, zweiten Verbindung (15) zum Übertragen von Daten-, Bild- und/oder Tonsignalen zwischen der Wartungseinheit (12) und einer mobilen, insbesondere am Kopf tragbaren, Kommunikationseinheit (16).

2. Wartungseinheit nach Anspruch 1, **gekennzeichnet durch** eine dritte Schnittstelle zum Herstellen einer dritten Verbindung (17), insbesondere über ein Telefon- und/oder Weitverkehrsnetz, zum Übertragen von Daten-, Bild- und/oder Tonsignalen zu einer externen bzw. dezentralen Kontrolleinheit (18).

3. Wartungseinheit nach Anspruch 1 oder 2, **gekennzeichnet durch** eine vierte Schnittstelle zum Herstellen einer vierten Verbindung (20), insbesondere über ein Nahbereichsnetz, zum Übertragen von Daten-, Bild- und/oder Tonsignalen zu einer internen, insbesondere hausinternen, Kontrolleinheit (19).

4. Wartungseinheit nach einem der vorhergehenden Ansprüche, **gekennzeichnet durch** einen rollbaren Wagen mit einer Rechnereinheit (28), einem Bildschirm (27), einer, insbesondere im Bildschirm integrierten, Eingabeeinheit, insbesondere Tastatur, Maus, Trackball und/oder Touchscreen-Bildschirmoberfläche, und wenigstens einem Messgerät (29) zum Auswerten und/oder Darstellen von von der Maschine (11) erhaltenen Daten- und/oder Messsignalen, insbesondere Multimeter, Oszilloskop, FFT-Analyzer und/oder Kennlinienschreiber.

5. Wartungseinheit nach einem der vorhergehenden Ansprüche, **gekennzeichnet durch** einen Akkumulator (31) zur unabhängigen elektrischen Energieversorgung der elektrischen bzw. elektronischen Komponenten der Wartungseinheit (12), insbesondere einem im Zentrum und unteren Bereich des Wagens angebrachten Akkumulators (31).

6. Wartungseinheit nach einem der vorhergehenden Ansprüche, **gekennzeichnet durch** eine Vorrichtung, insbesondere Schublade (34), zur Aufnahme von Werkzeugen.

7. Wartungseinheit nach einem der vorhergehenden Ansprüche, **dadurch gekennzeichnet, dass** die mobile Kommunikationseinheit (16) eine Haltevorrichtung (37) für einen Kopfhörer (40), eine Kamera (38) und ein Mikrofon (41) aufweist.

8. Wartungseinheit nach einem der vorhergehenden Ansprüche, **dadurch gekennzeichnet, dass** die mobile Kommunikationseinheit (16) einen an der Haltevorrichtung (37) befestigten, insbesondere um mehrere Achsen schwenkbaren, Monitor (39) aufweist.
